# EUROPEAN PATENT APPLICATION

(11) **EP 4 742 022 A1**
(43) Date of publication of application: **13.05.2026**
(21) Application number: 23942632.3
(22) Date of filing: 03.07.2023
(51) Int. Cl.: G06F 3/0488

(54) **TOUCH OPERATION DETECTION DEVICE**

(71) Applicant: Nissan Motor Co., Ltd., Yokohama-shi, Kanagawa 221-0023 (JP); Renault s.a.s, 92100 Boulogne Billancourt (FR)
(72) Inventor: KOBAYASHI, Aomi, Atsugi-shi, Kanagawa, 243--0123 (JP); BANDO, Takuya, Atsugi-shi, Kanagawa, 243--0123 (JP); FUKUDA, Kiyomichi, Atsugi-shi, Kanagawa, 243--0123 (JP); HOMMA, Kiyotaka, Atsugi-shi, Kanagawa, 243--0123 (JP); UEKURI, Tomomichi, Atsugi-shi, Kanagawa, 243--0123 (JP)
(74) Representative: Global IP Europe Patentanwaltskanzlei
(86) International application number: PCT/IB2023/000383
(87) International publication number: WO 2025/008654

(57) **Abstract**

A touch operation detection device (100) includes a controller (13). The controller (13) recognizes a direction of a swipe operation performed on a touch sensor (11) based on a touch point of a finger of an operator on the touch sensor (11), the touch sensor (11) being arranged in a range in which the touch sensor (11) is operable with the finger of the operator in a state where an operation device (2) is gripped by the operator. The controller (13) determines the direction of the swipe operation based on a plurality of regions (R1 to R8) radially divided from a central portion of the touch sensor. A size of at least one of the plurality of regions (R1 to R8) is different from sizes of the other regions.

## Description

### TECHNICAL FIELD

The present invention relates to a touch operation detection device.

### BACKGROUND ART

Patent Literature 1 discloses an input device in which a touch sensor is installed on a pressing switch and that enables a swipe operation when detecting the swipe operation in a prescribed time period before detection of a pressing operation performed on the pressing switch.

### CITATION LIST

### PATENT LITERATURE

Patent Literature 1: Japanese Patent No. 5876013

### SUMMARY OF INVENTION

### PROBLEMS TO BE SOLVED BY INVENTION

The input device described in Patent Literature 1 recognizes one of a swipe in a first direction from a lower region to an upper region of a touch surface divided into four regions of upper, lower, left, and right regions, a swipe in a second direction from the upper region toward the lower region, a swipe in a third direction from the left region toward the right region, and a swipe in a fourth direction from the right region toward the left region.

However, when the operator performs the swipe operation with the finger, a position of a trajectory of the swipe operation varies due to a movable range of the finger of the operator. Accordingly, there is a possibility that the swipe operation intended by the operator is erroneously recognized.

The present invention has been made in view of the above-mentioned problem, and an object thereof is to provide a touch operation detection device and a touch operation detection method that can reduce erroneous recognition of a swipe operation intended by an operator.

### SOLUTION TO SOLVE PROBLEMS

A touch operation detection device according to one aspect of the present embodiment includes a controller configured to determine a direction of a swipe operation performed on a touch sensor based on a touch point of a finger of an operator on the touch sensor, the touch sensor being arranged in a range in which the touch sensor is operable with the finger of the operator in a state where an operation device is gripped by the operator. The controller is configured to determine the direction of the swipe operation based on a plurality of regions radially divided from a central portion of the touch sensor, and a size of at least one of the plurality of regions is different from sizes of the other regions.

### EFFECTS OF INVENTION

According to one aspect of the present embodiment, erroneous recognition of an operation intended by an operator can be reduced.

### BRIEF DESCRIPTION OF DRAWINGS

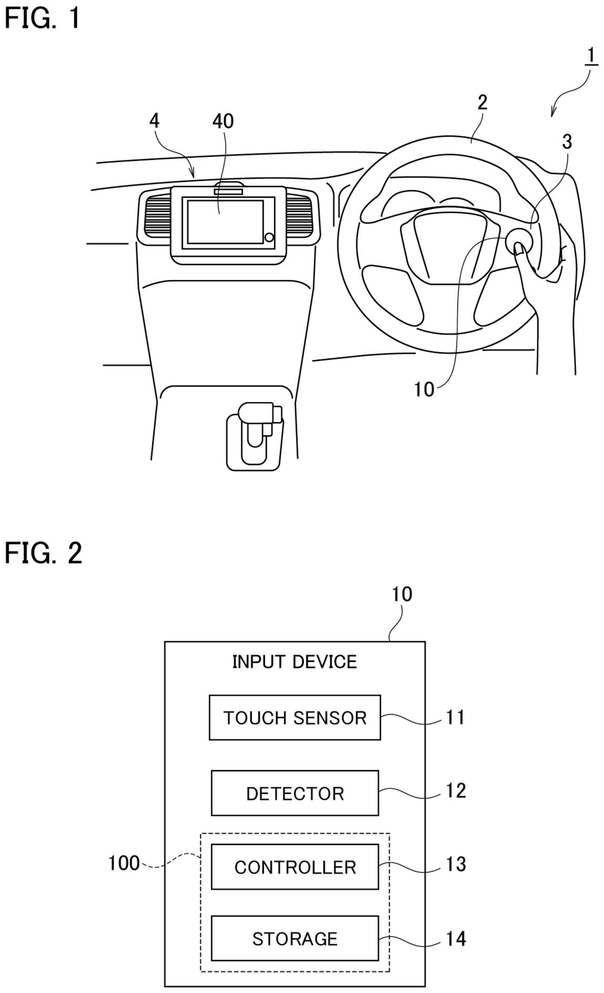

[Fig. 1] Fig. 1 is a diagram illustrating an outer appearance around an instrument panel of a vehicle in which a touch operation detection device according to one embodiment is installed.
[Fig. 2] Fig. 2 is a block diagram illustrating a configuration of the touch operation detection device according to one embodiment.

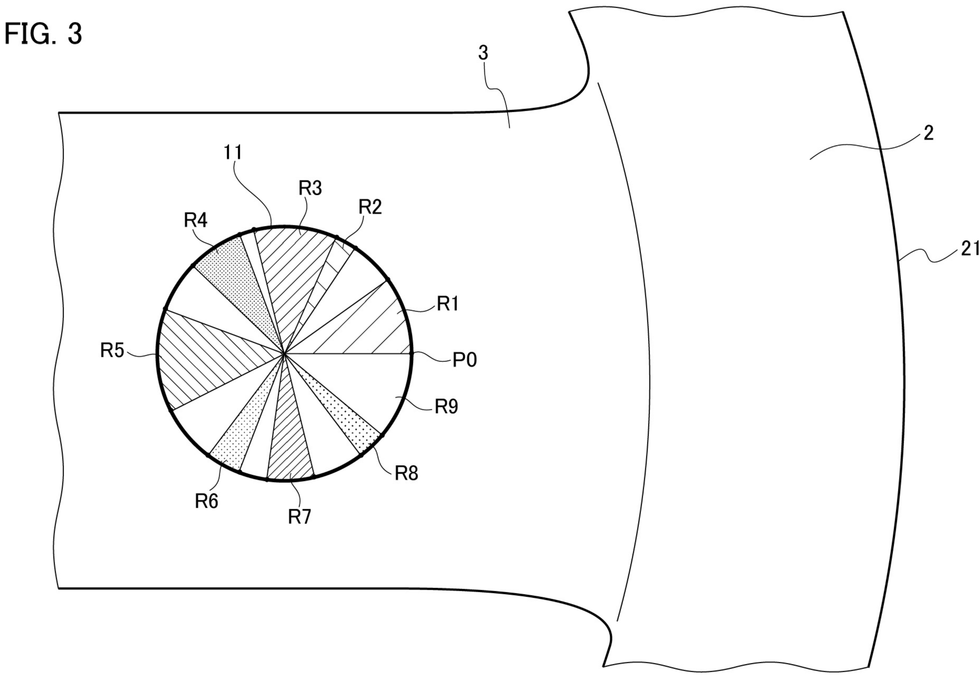

[Fig. 3] Fig. 3 is a diagram illustrating an example of multiple regions in a touch sensor of the touch operation detection device according to one embodiment.

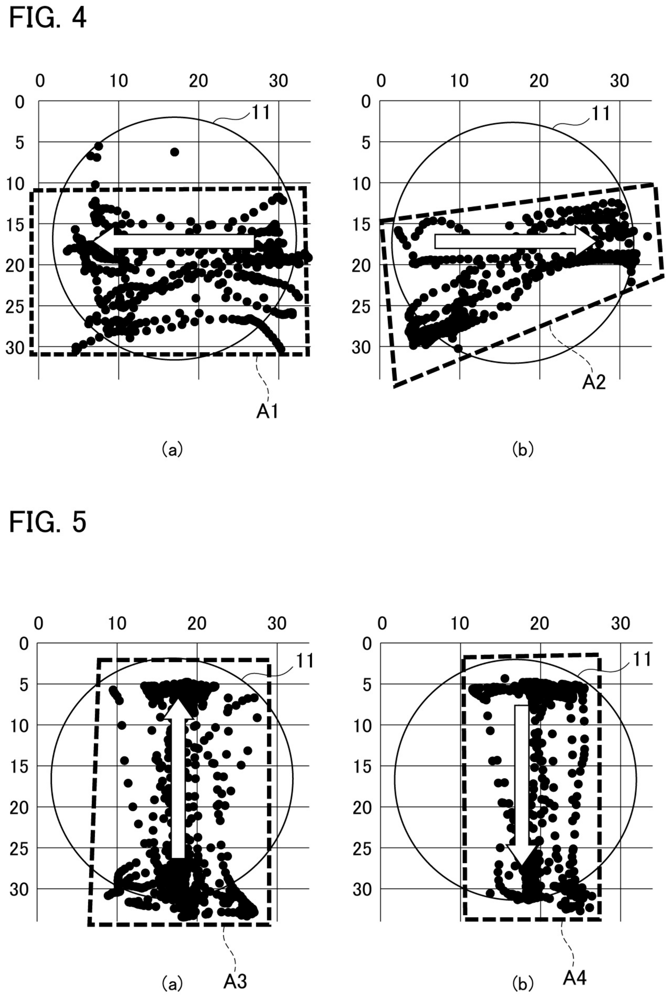

[Fig. 4] Fig. 4 is a diagram in which trajectories of a touch point that are obtained in advance through experiments and that are obtained when swipe operations toward leftward and rightward directions are performed on the touch sensor are illustrated together with a circle indicating an outer edge of the touch sensor.
[Fig. 5] Fig. 5 is a diagram in which trajectories of the touch point that are obtained in advance through experiments and that are obtained when swipe operations toward upper and lower directions are performed on the touch sensor are illustrated together with the circle indicating the outer edge of the touch sensor.

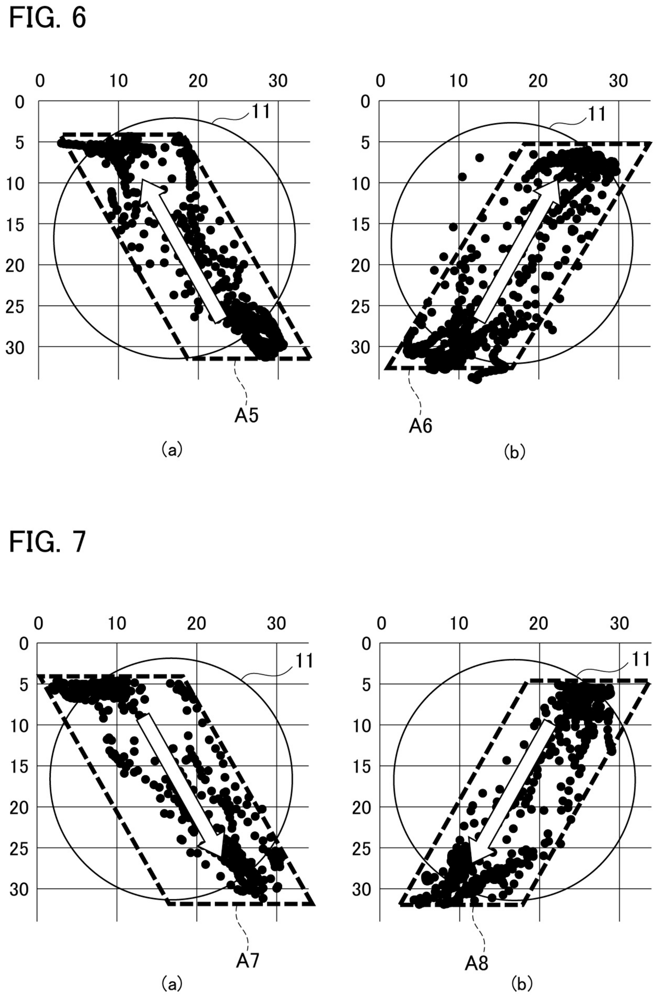

[Fig. 6] Fig. 6 is a diagram in which trajectories of the touch point that are obtained in advance through experiments and that are obtained when swipe operations toward oblique upper-left and upper-right directions are performed on the touch sensor are illustrated together with the circle indicating the outer edge of the touch sensor.
[Fig. 7] Fig. 7 is a diagram in which trajectories of the touch point that are obtained in advance through experiments and that are obtained when swipe operations toward oblique lower-left and lower-right directions are performed on the touch sensor are illustrated together with the circle indicating the outer edge of the touch sensor.

### DESCRIPTION OF EMBODIMENTS

An embodiment is explained with reference to the drawings. In the illustration of the drawings, the same parts are denoted by the same reference numerals, and explanation thereof is omitted.

For example, as illustrated in Fig. 1, an input device 10 used as a remote controller of a car navigation device 4 is installed in a vehicle 1. Contents instructed by an operation performed on the input device 10 by a driver who is an operator of the input device 10 are taken in by the car navigation device 4, and display information generated depending on an application executed by the car navigation device 4 is displayed on a display unit 40. The application described herein includes navigation that performs destination searching and guiding/directing, as well as a media player that reproduces music and video, display of meters, an SNS (social networking service), an e-mail, and the like. Note that the input device 10 can be applied not only as an input device for the car navigation device 4, but also as an input device for a vehicle-installed device such as a meter (not illustrated) and a head-up display (not illustrated).

As illustrated in Fig. 2, the input device 10 includes a touch sensor 11, a detector 12, a controller 13, and a storage 14. Note that the input device 10 only needs to have at least a function of detecting a touch point with the touch sensor 11 and the detector 12. The controller 13 and the storage 14 form a touch operation detection device 100 that determines a direction of a swipe operation based on the touch point, and may be formed in a separate body from the input device 10.

The touch sensor 11 is arranged in a range in which the touch sensor 11 is operable with, for example, the thumb of the operator in a state where an operation device is gripped. For example, as illustrated in Fig. 1, the touch sensor 11 is arranged in a spoke portion 3 of a steering wheel 2 that is the operation device, the spoke portion 3 being a range in which the touch sensor 11 is operable with the thumb of the operator in state where a rim of the steering wheel 2 is held with the palm of the hand of the operator. Note that, although the touch sensor 11 is arranged in the range in which the touch sensor 11 is operable with the thumb of the right hand of the operator in the state where the rim of the steering wheel 2 is held with the palm of the hand of the operator in Fig. 1, the touch sensor 11 may be arranged in a range in which the touch sensor 11 is operable with the thumb of the left hand of the operator in the state where the rim of the steering wheel 2 is held with the palm of the hand of the operator.

The touch sensor 11 is a capacitance sensor, and includes a detection surface that detects contact of the thumb of the operator. When the thumb of the driver who is the operator comes into contact with the surface of the touch sensor 11, the detection surface detects a position (hereinafter, referred to as touch point) where the thumb is in contact.

Fig. 3 illustrates an example of multiple regions used by the controller to determine the direction of the swipe operation in the case where the touch sensor 11 is arranged in the range in which the touch sensor 11 is operable with the thumb of the right hand of the operator in the state where the rim of the steering wheel 2 is held with the palm of the hand of the operator. Note that, in the case where the touch sensor 11 is arranged in the range in which the touch sensor 11 is operable with the thumb of the left hand of the operator in the state where the rim of the steering wheel 2 held with the palm of the hand of the operator, the multiple regions are regions obtained by inverting the multiple regions illustrated in Fig. 3 in the left-right direction. For example, as illustrated in Fig. 3, the multiple regions include eight regions R1 to R8 different in size. In the example illustrated in Fig. 3, the touch sensor 11 has, for example, a circular shape, and the regions R1 to R8 are eight regions radially divided from a central portion of the touch sensor 11 at different angles. Note that the central portion of the touch sensor 11 herein means a range around a center portion of the touch sensor 11 including the center of the touch sensor 11. The eight regions R1 to R8 divided from the central portion of the touch sensor 11 at different angles with a prescribed position P0 on an outer edge of the touch sensor 11 being a reference are set. In the example illustrated in Fig. 3, the palm of the hand or the ball of the thumb of the operator is located on an outer edge 21 of the rim of the steering wheel 2 in the state where the rim of the steering wheel 2 is held with the palm of the hand of the operator, and the operator performs the swipe operation on the touch sensor 11 by moving the fingertip of the thumb while moving the joints. Accordingly, the multiple regions R1 to R8 are set in advance based on operation characteristics of the thumb of the operator in the swipe operation. Details of a setting method of the multiple regions R1 to R8 illustrated in Fig. 3 are described later with reference to Figs. 4 to 7. Note that, although the sizes of the eight regions R1 to R8 are different from one another in the example illustrated in Fig. 3, it is only necessary that the size of at least one of the multiple regions R1 to R8 is different from the sizes of the other regions. Moreover, a gap is provided between at least one pair of adjacent regions among the multiple regions R1 to R8. For example, as illustrated in Fig. 3, there are gaps between the regions R1 and R2, the regions R3 and R4, the regions R4 and R5, the regions R5 and R6, the regions R6 and R7, the regions R7 and R8, and the regions R1 and R8 adjacent to one another among the multiple regions R1 to R8.

The detector 12 detects the touch point on the touch sensor 11.

The controller 13 includes, for example, a CPU (central processing unit), a memory, and an input-output unit. A prescribed computer program is installed in the controller 13, and the controller 13 determines the direction of the swipe operation performed on the touch sensor 11 by executing the computer program.

The controller 13 recognizes the direction of the swipe operation performed on the touch sensor 11 based on the touch point detected by the detector 12. More specifically, first, the controller 13 recognizes transition of the touch point (trajectory of the touch point) from a time point where the touch point is detected by the detector 12, and recognizes the swipe operation when the length of the trajectory of the touch point is equal to or more than a prescribed value. When the controller 13 recognizes the swipe operation, the controller 13 determines the direction of the swipe operation depending on which one of the multiple regions R1 to R8 an end point of the trajectory of the touch point is located. Note that the swipe operation herein collectively refers to operations of "tracing", "shifting", "sweeping", "flicking", and "wiping" while touching the surface of the touch sensor 11 with the thumb.

For example, in the touch sensor 11 illustrated in Fig. 3, when the length of the trajectory of the touch point is equal to or more than the prescribed value and the end point of the trajectory of the touch point is located in the region R5, the controller 13 determines that the direction of the swipe operation is a leftward direction. When the length of the trajectory of the touch point is equal to or more than the prescribed value and the end point of the trajectory of the touch point is located in the region R1, the controller 13 determines that the direction of the swipe operation is a rightward direction. Moreover, when the length of the trajectory of the touch point is equal to or more than the prescribed value and the end point of the trajectory of the touch point is located in the region R3, the controller 13 determines that the direction of the swipe operation is an upward direction. When the length of the trajectory of the touch point is equal to or more than the prescribed value and the end point of the trajectory of the touch point is located in the region R7, the controller 13 determines that the direction of the swipe operation is a downward direction. When the length of the trajectory of the touch point is equal to or more than the prescribed value and the end point of the trajectory of the touch point is located in the region R4, the controller 13 determines that the direction of the swipe operation is an upper-left direction. When the length of the trajectory of the touch point is equal to or more than the prescribed value and the end point of the trajectory of the touch point is located in the region R2, the controller 13 determines that the direction of the swipe operation is an upper-right direction. When the length of the trajectory of the touch point is equal to or more than the prescribed value and the end point of the trajectory of the touch point is located in the region R8, the controller 13 determines that the direction of the swipe operation is a lower-right direction. When the length of the trajectory of the touch point is equal to or more than the prescribed value and the end point of the trajectory of the touch point is located in the region R6, the controller 13 determines that the direction of the swipe operation is a lower-left direction.

For example, semiconductor memory elements such as a SRAM (static RAM), a DRAM (dynamic RAM), and a flash RAM are mounted in the storage 14, and ranges of the multiple regions are stored in these memory elements. Moreover, an OS (operating system) and application programs executed by the controller 13 are stored in the memory elements of the storage 14. Furthermore, various pieces of data generated in processes of executing the application programs are stored in the memory elements of the storage 14.

The display unit 40 is a display monitor that uses an LCD (liquid crystal display), an OLED (organic light emitted diode), an electronic paper, or the like as a display device, and displays display data generated by the applications executed by the controller 13.

Next, an example of the setting method of the multiple regions R1 to R8 illustrated in Fig. 3 is explained with reference to Figs. 4 to 7. Figs. 4 to 7 are diagrams illustrating the transitions of the touch point (trajectories of the touch point) that are obtained in advance through experiments and that are obtained when the swipe operations toward the respective directions are performed on the touch sensor 11, together with a circle indicating an outer edge of the touch sensor 11. In Figs. 4 to 7, the operator performs the swipe operations in the respective directions with the thumb of the right hand. When the operator performs the swipe operations in the respective directions with the thumb of the left hand, results obtained by inverting Figs. 4 to 7 in the left-right direction are expected to be obtained. The number of pieces of data obtained in Figs. 4 to 7 are not limited to a particular number.

Regions R1 to R8 used by the controller 13 to determine the direction of the swipe operation are set in advance in the input device 10, based on the trajectories of the touch point illustrated in Figs. 4 to 7. For example, the part (a) of Fig. 4 illustrates the trajectories of the touch point in the case where the operator performs the swipe operation in the leftward direction. The region R5 used by the controller 13 to determine the swipe operation in the leftward direction can be set based on a range A1 substantially including the end points of the trajectories of the touch point with lengths equal to or more than the prescribed value in the part (a) of Fig. 4. Moreover, the part (b) of Fig. 4 illustrates the trajectories of the touch point in the case where the operator performs the swipe operation in the rightward direction. The region R1 used by the controller 13 to determine the swipe operation in the rightward direction can be set based on a range A2 substantially including the end points of the trajectories of the touch point with lengths equal to or more than the prescribed value in the part (b) of Fig. 4.

In the parts (a) and (b) of Fig. 4, the operator performs the swipe operations in the leftward direction and the rightward direction with the thumb of the right hand. When the operator performs the swipe operation in the leftward direction with the thumb of the right hand, a movement is such that the thumb is abducted in a direction away from the outer edge 21 of the steering wheel 2, that is the base of the thumb. Meanwhile, when the operator performs the swipe operation in the rightward direction with the thumb of the right hand, a movement is such that the thumb is adducted in a direction toward the outer edge 21 of the steering wheel 2, that is toward the base of the thumb. The part (b) of Fig. 4 illustrates that the swipe operation in the rightward direction with the thumb of the right hand of the operator has such an operation characteristic that swiping is performed in an upper-right direction as a whole due to the characteristics of the joint of the thumb.

In this case, the range A1 substantially including the end points of the trajectories of the touch point in the part (a) of Fig. 4 is larger than the range A2 substantially including the end points of the trajectories of the touch point in the part (b) of Fig. 4. This means that variation in the trajectories of the touch point in the case where the operator performs the swipe operation in the leftward direction is larger than variation in the trajectories of the touch point in the case where the operator performs the swipe operation in the rightward direction. Accordingly, the region R5 set based on the range A1 is larger than the region R1 set based on the range A2. In other words, in the case where the operator performs the swipe operations in the leftward direction and the rightward direction with the thumb while holding the rim of the steering wheel 2 with the palm of the hand of the operator, the area (angle) of the region R5 located far away from the outer edge 21 of the steering wheel 2 is larger than the area (angle) of the region R1 located close to the outer edge 21 of the steering wheel 2. Note that the characteristic that the area (angle) of the region R5 is larger than the area (angle) of the region R1 applies also to the case where the swipe operations in the leftward direction and the rightward direction are performed with the fingers other than the thumb such as, for example, the index finger.

Moreover, for example, the part (a) of Fig. 5 illustrates the trajectories of the touch point in the case where the operator performs the swipe operation in the upward direction. The region R3 used by the controller 13 to determine the swipe operation in the upward direction can be set based on a range A3 substantially including the end points of the trajectories of the touch point with lengths equal to or more than the prescribed value in the part (a) of Fig. 5. Furthermore, the part (b) of Fig. 5 illustrates the trajectories of the touch point in the case where the operator performs the swipe operation in the downward direction. The region R7 used by the controller 13 to determine the swipe operation in the downward direction can be set based on a range A4 substantially including the end points of the trajectories of the touch point with lengths equal to or more than the prescribed value in the part (b) of Fig. 5.

In the parts (a) and (b) of Fig. 5, the operator performs the swipe operations in the upward direction and the downward direction with the thumb of the right hand. When the operator performs the swipe operation in the upward direction with the thumb of the right hand, a movement is such that the thumb is adducted in the upward direction. Meanwhile, when the operator performs the swipe operation in the downward direction with the thumb of the right hand, a movement is such that the thumb is abducted in the downward direction.

In this case, the range A3 substantially including the end points of the trajectories of the touch point in the part (a) of Fig. 5 is larger than the range A4 substantially including the end points of the trajectories of the touch point in the part (b) of Fig. 5. This means that variation in the trajectories of the touch point in the case where the operator performs the swipe operation in the upward direction is larger than variation in the trajectories of the touch point in the case where the operator performs the swipe operation in the downward direction. Accordingly, the region R3 set based on the range A3 is larger than the region R7 set based on the range A4. In other words, in the case where the operator performs the swipe operations in the upward direction and the downward direction with the thumb while holding the rim of the steering wheel 2 with the palm of the hand of the operator, the area (angle) of the region R3 located above the central portion of the touch sensor 11 is larger than the area (angle) of the region R7 located below the central portion of the touch sensor 11. Note that the characteristic that the area (angle) of the region R3 is larger than the area (angle) of the region R7 applies also to the case where the swipe operations in the upward direction and the downward direction are performed with the fingers other than the thumb such as, for example, the index finger.

For example, the part (a) of Fig. 6 illustrates the trajectories of the touch point in the case where the operator performs the swipe operation in the upper-left direction. The region R4 used by the controller 13 to determine the swipe operation in the upper-left direction can be set based on a range A5 substantially including the end points of the trajectory of the touch point with lengths equal to or more than the prescribed value in the part (a) of Fig. 6. In this case, in the part (a) of Fig. 6, the operator performs the swipe operation in the upper-left direction with the thumb of the right hand. When the operator performs the swipe operation in the upper-left direction with the thumb of the right hand, a movement is such that the thumb is stretched in a direction away from the outer edge 21 of the steering wheel 2, that is the base of the thumb. Moreover, the part (b) of Fig. 6 illustrates the trajectories of the touch point in the case where the operator performs the swipe operation in the upper-right direction. The region R2 used by the controller 13 to determine the swipe operation in the upper-right direction can be set based on a range A6 substantially including the end points of the trajectories of the touch point with lengths equal to or more than the prescribed value in the part (b) of Fig. 6. In this case, in the part (b) of Fig. 6, the operator performs the swipe operation in the upper-right direction with the thumb of the right hand. When the operator performs the swipe operation in the upper-right direction with the thumb of the right hand, a movement is such that the thumb is adducted in a direction toward the base of the thumb.

For example, the part (a) of Fig. 7 illustrates the trajectories of the touch point in the case where the operator performs the swipe operation in the lower-right direction. The region R8 used by the controller 13 to determine the swipe operation in the lower-right direction can be set in the input device 10 based on a range A7 substantially including the end points of the trajectories of the touch point with lengths equal to or more than the prescribed value in the part (a) of Fig. 7. In this case, in the part (a) of Fig. 7, the operator performs the swipe operation in the lower-right direction with the thumb of the right hand. When the operator performs the swipe operation in the lower-right direction with the thumb of the right hand, a movement is such that the thumb is bent in a direction toward the outer edge 21 of the steering wheel 2, that is the base of the thumb. Moreover, the part (b) of Fig. 7 illustrates the trajectory of the touch point in the case where the operator performs the swipe operation in the lower-left direction. The region R6 used by the controller 13 to determine the swipe operation in the lower-left direction can be set based on a range A8 substantially including the end points of the trajectories of the touch point with lengths equal to or more than the prescribed value in the part (b) of Fig. 7. In this case, in the part (b) of Fig. 7, the operator performs the swipe operation in the lower-left direction with the thumb of the right hand. When the operator performs the swipe operation in the lower-left direction with the thumb of the right hand, a movement is such that the thumb is abducted in a direction away from the base of the thumb.

As described above, the ranges of the multiple regions R1 to R8, that is the positions and the areas (angles) of the multiple regions R1 to R8 are set based on the operation characteristics of the thumb of the operator in the swipe operations. Note that, in the present embodiment, explanation is given of the setting method of the multiple regions in the case where the touch sensor 11 is arranged in the range where the touch sensor 11 is operable with the thumb of the right hand of the operator in the state where the rim of the steering wheel 2 is held with the palm of the hand of the operator and the operator performs the swipe operations in the respective directions with the thumb of the right hand while holding the rim of the steering wheel 2 with the palm of the hand of the operator, with reference to Figs. 3 to 7. In the case where the touch sensor 11 is arranged in the range where the touch sensor 11 is operable with the thumb of the left hand of the operator in the state where the rim of the steering wheel 2 is held with the palm of the hand of the operator and the operator performs the swipe operations in the respective directions with the thumb of the left hand while holding the rim of the steering wheel 2 with the palm of the hand of the operator, the multiple regions may be set by inverting the multiple regions R1 to R8 illustrated in Fig. 3 in the left-right direction. Moreover, in the case where the operator performs the swipe operations in the respective directions with the thumb of the left hand while holding the rim of the steering wheel 2 with the palm of the hand of the operator, the multiple regions may be set based on data that is obtained in advance through experiments and that indicates transitions of the touch point (trajectories of the touch point) in the case where the swipe operations in the respective directions are performed by the operator on the touch sensor 11 with the thumb of the left hand.

Furthermore, a region that is not used by the controller 13 in the recognition of the swipe operations may be set based on the operation characteristics of the thumb of the operator in the swipe operations. For example, it is known from experiment data obtained in advance that a region R9 in which erroneous detection of the swipe operation in the rightward direction and the swipe operation in the lower-right direction frequently occurs is present between the region R1 located close to the outer edge 21 of the steering wheel 2 and the region R8 located below the region R1. The prescribed region R9 in which the controller 13 disables recognition of the swipe operation may be set in advance in the input device 10. In this case, the controller 13 disables the recognition of the swipe operation when the end point of the trajectory of the touch point is located in the prescribed region R9 between the region R1 located close to the outer edge of the steering wheel 2 and the region R8 located below the region R1.

### [Operations and Effects]

As explained above, the touch operation detection device 100 according to one embodiment includes the controller 13. The controller 13 determines the direction of the swipe operation performed on the touch sensor 11 based on the touch point of the finger on the touch sensor 11, the touch sensor 11 arranged in the range in which the touch sensor 11 is operable with the finger of the operator in the state where the operation device is gripped. The operation device is, for example, the steering wheel 2, and the finger is the thumb of the operator in the state where the rim of the steering wheel 2 is held with the palm of the hand of the operator. The controller 13 determines the direction of the swipe operation based on the multiple regions R1 to R8 radially divided from the central portion of the touch sensor 11. The size of at least one of the multiple regions R1 to R8 is different from the sizes of the other regions.

Moreover, in the touch operation detection device 100 according to one embodiment, the multiple regions R1 to R8 are set based on the operation characteristics of the finger of the operator in the swipe operations. The touch sensor 11 has a circular shape, and the multiple regions R1 to R8 are regions radially divided from the central portion of the touch sensor 11 with at least one of the regions divided at an angle different from the angles of the other regions.

In the touch operation detection device 100, the regions with the sizes suitable for determining the directions of the respective swipe operations can be provided in the areas suitable for determining the directions of the respective swipe operations in the touch sensor 11 arranged in the range in which the touch sensor 11 is operable with the finger of the operator. The touch operation detection device 100 can thus easily determine the directions of the swipe operations intended by the operator, and erroneous recognition of the swipe operation can be reduced. Note that, although the touch sensor 11 is assumed to be operated with the thumb in the above-mentioned embodiment, the finger operating the touch sensor 11 is not limited to the thumb in the present invention. In the case where the touch sensor 11 is operated with the other fingers, it is only necessary to set the multiple regions based on operation characteristics of the other fingers.

Moreover, the multiple regions R1 to R8 include the first region R5 located far from the outer edge 21 of the operation device 2 and the second region R1 located close to the outer edge 21 of the operation device 2. The area of the first region R5 is larger than the area of the second region R1.

The variation in the trajectory of the touch point of the thumb in the swipe operation in the case where the swipe operation is performed toward the first region R5 located far from the outer edge 21 of the operation device 2 is larger than that in the case where the swipe operation is performed toward the second region R1 located close to the outer edge 21 of the operation device. Accordingly, making the area of the first region R5 larger than the area of the second region R1 allows the touch operation detection device 100 to tolerate the variation in the trajectory of the touch point of the thumb. The touch operation detection device 100 can more easily determine the direction of the swipe operation intended by the operator, and the erroneous recognition of the swipe operation can be further reduced.

Moreover, the multiple regions R1 to R8 include the third region R3 located above the central portion of the touch sensor 11, and the fourth region R7 located below the central portion of the touch sensor 11. The area of the third region R3 is larger than the area of the fourth region R7.

The variation in the trajectory of the touch point of the thumb in the swipe operation in the case where the swipe operation is performed toward the third region R3 located above the central portion of the touch sensor 11 is larger than that in the case where the swipe operation is performed toward the fourth region R7 located below the central portion of the touch sensor 11. Accordingly, making the area of the third region R3 larger than the area of the fourth region R7 allows the touch operation detection device 100 to tolerate the variation in the trajectory of the touch point of the thumb. The direction of the swipe operation intended by the operator can be more easily determined, and the erroneous recognition of the swipe operation can be further reduced.

Moreover, the gap is provided between at least one pair of regions adjacent to each other among the multiple regions R1 to R8. Providing the gap between the regions adjacent to each other among the multiple regions R1 to R8 for determining the directions of the swipe operations can disable the recognition of the swipe operation toward the gap region, and reduce erroneous recognition of the swipe operation in an adjacent direction.

Moreover, the controller 13 of the touch operation detection device 100 according to one embodiment disables the recognition of the swipe operation in the case where the end point of the trajectory of the touch point is located in the prescribed region R9 between the second region R1 of the touch sensor 11 and the fifth region R8 located below the second region R1.

The prescribed region R9 between the second region R1 and the fourth region R7 is a region where erroneous recognition of the swipe operation in the rightward direction and the swipe operation in the lower-right direction frequently occurs. Accordingly, the touch operation detection device 100 disables the recognition of the swipe operation in the case where the trajectory of the touch point toward the prescribed region R9 between the second region R1 and the fourth region R7 is recognized, and the erroneous recognition of the swipe operation can be thereby further reduced.

Although the embodiment of the present invention has been described above, it should not be understood that the description and the drawings forming part of this disclosure limit the present invention. Various alternative embodiments, examples, and operation techniques are apparent to those skilled in the art from the present disclosure.

### REFERENCE SIGNS LIST

- 2: operation device (steering wheel)
- 10: input device
- 11: touch sensor
- 13: controller
- 100: touch operation detection device
- R1 to R8: multiple regions

## Claims

1. A touch operation detection device comprising:
a controller configured to determine a direction of a swipe operation performed on a touch sensor based on a touch point of a finger of an operator on the touch sensor, the touch sensor being arranged in a range in which the touch sensor is operable with the finger of the operator in a state where an operation device is gripped by the operator, wherein
the controller is configured to determine the direction of the swipe operation based on a plurality of regions radially divided from a central portion of the touch sensor, and
a size of at least one of the plurality of regions is different from sizes of the other regions.

2. The touch operation detection device according to claim 1, wherein
the operation device is a steering wheel, and
the finger is a thumb of the operator in a state where a rim of the steering wheel is held with a palm of a hand of the operator.

3. The touch operation detection device according to claim 1 or 2, wherein
the plurality of regions include a first region located far from an outer edge of the operation device and a second region located close to the outer edge of the operation device, and
an area of the first region is larger than an area of the second region.

4. The touch operation detection device according to any one of claims 1 to 3, wherein
the plurality of regions include a third region located above the central portion of the touch sensor and a fourth region located below the central portion of the touch sensor, and
an area of the third region is larger than an area of the fourth region.

5. The touch operation detection device according to claim 3 or claim 4 dependent on claim 3, wherein the controller is configured to disable recognition of the swipe operation upon an end point of a trajectory of the touch point being located in a prescribed region between the second region and a fifth region located below the second region.

6. The touch operation detection device according to any one of claims 1 to 5, wherein the plurality of regions are set based on an operation characteristic of the finger of the operator in the swipe operation.

7. The touch operation detection device according to any one of claims 1 to 6, wherein a gap is provided between at least one pair of regions adjacent to each other among the plurality of regions.

8. The touch operation detection device according to any one of claims 1 to 7, wherein
the touch sensor has a circular shape, and
the plurality of regions are regions radially divided from the central portion of the touch sensor with at least one of the regions divided at an angle different from angles of the other regions.
